Europäisches Patentamt
European Patent Office
Office européen des brevets

(19)

(11) Publication number: **0 382 957 A1**

# EUROPEAN PATENT APPLICATION

(12)

(21) Application number: 89301467.0

(22) Date of filing: 15.02.89

(51) Int. Cl.5: C08K 5/50, C08L 33/12, C08L 69/00

(43) Date of publication of application: 22.08.90 Bulletin 90/34

(84) Designated Contracting States: DE FR GB

(71) Applicant: Takemoto Yushi Kabushiki Kaisha
2-5, Minato-machi
Gamagouri-shi Aichi-ken(JP)

(72) Inventor: Sugiura, Masato
955-1 Araimae Fusou-cho
Gamagouri-shi Aichi-ken(JP)
Inventor: Shimizu, Hideo
19-9 Matsubara-cho
Gamagouri-shi Aichi-ken(JP)
Inventor: Imamura, Shigeru
4-68-12 Mori
Toyokawa-shi Aichi-ken(JP)
Inventor: Sugiura, Fumitoshi
26-5 Sakuma Takenoya-cho
Gamagouri-shi Aichi-ken(JP)

(74) Representative: Clifford, Frederick Alan et al
MARKS & CLERK 57/60 Lincoln's Inn Fields
London WC2A 3LS(GB)

(54) **Antistatic resin composition with transparency.**

(57) An antistatic resin composition with transparency comprises 99.9 to 9.0wt% of a synthetic resin selected from polycarbonate or polymethyl methacrylate and 0.1 to 10wt% of a heat-resistant antistat comprising a phosphonium sulfonate shown by the general formula (I) below:

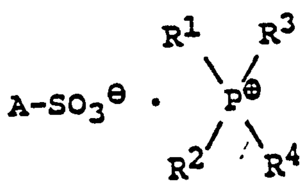

(I)

wherein A is an alkyl group with 1-36 carbon atoms, an alkeny group with 4-24 carbon atoms, a phenyl group,a phenyl group substituted by at least one alkyl group with 1-18 carbon atoms, a naphthyl group or a naphthyl group substituted by at least one alkyl group with 1 - 18 carbon atoms; $R_1$, $R_2$ and $R_3$ are identical, each being an aliphatic or aromatic monovalent hydrocarbon group wlth 1-8 carbon atoms; and $R_4$ is a substituted or unsubstituted hydrocarbon group with 1-18 carbon atoms.

EP 0 382 957 A1

# ANTISTATIC RESIN COMPOSITION WITH TRANSPARENCY

THIS INVENTION relates to an antistatic resin composition with transparency comprising polycarbonate or polymethyl methacrylate and a heat-resistant antistat.

Synthetic macromolecular materials are generally hydrophobic. As a result, they tend to become electrostatically charged.This property is a serious obstacle not only in the production processes of such materials but also in using products made therefrom. In the past, electrically conductive agents such as carbon and metallic particles or surfactants have been used in various attempts to reduce electrostatic charges of synthetic macromolecular materials by mixing them internally together or by coating the material with an agent.These methods using electrically conductive agents are not generally feasible for many reasons such as the large amount of agents which must usually be used, the difficulty in adding them to a material, the difficulty in obtaining a transparent product and the high cost of such conductive agents. Thus, these agents can be used only in limited situations.

By contrast, since there are many antistats having surfactants as their main constituent, appropriate ones may be selected therefrom according to the situation. In fact, many of the type to be internally added have been considered and tried.When used as an internally applied antistat, however, anionic surfactants are difficult to handle because they are inferior in compatibility and uniform dispersibility or tend to decompose or deteriorate when heated. Cationic surfactants containing quaternary nitrogen in their molecules and amphoteric surfactants, on the the hand, can be used only in limited situations because they are extremely poor in heat resistance although their antistatic characteristics are good. As for non-ionic surfactants, they are relatively superior to the aforementioned ionic surfactants regarding compatibility with synthetic macromolecular materials but tend to be weak in antistatic characteristics and their effects disappear with time at normal or high temperatures. Although metal salts of organic sulfonic acids have been reported especially as internally applied antistats for polycarbonate and polyester resins which are molded at high temperatures (West German patent 3 004 017), they are not sufficient in compatibility with resins or heat resistance. There has also been a report on using phosphonium salts of organic sulfonic acids having halogen substituent as a flame retardant (U.S. Patent 4 093 589) but they are not to be expected to serve as antistats at all.

## SUMMARY OF THE INVENTION

It is therefore an object of the present invention to provide an antistatic resin composition with transparency comprising polycarbonate or polymethyl methacrylate and a heat-resistant antistat with which the aforementioned problems of conventional agent can be eliminated.

The present invention is based on the discovery that for obtaining a resin composition with transparency having improved antistatic and heat resistant characteristics and reduced dependence on humidity, phosphium sulfonates of a special type are desirable and a particularly superior result can be obtained if such a compound is added and mixed to polycarbonate or polymethyl methacrylate.

This invention comprises a antistatic resin composition with transparency comprising 99.9 to 90 wt% of a synthetic resin selected from polycarbonate or polymethyl methacrylate and 0.1 to 10 wt% of a heat-resistant antistat comprising a phosphonium sulfonate shown by the general formula (I) below:

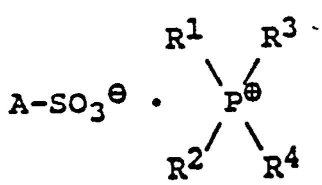

(I)

wherein A is an alkyl group with 1-36 carbon atoms, an alkeny group with 4-24 carbon atoms, a phenyl group, a phenyl group substituted by at least one alkyl group with 1-18 carbon atoms, a naphthyl group or a naphthyl group substituted by at least one alkyl group with 1 -18 carbon atoms; $R_1$, $R_2$ and $R_3$ are identical, each being an aliphatic or aromatic monovalent hydrocarbon group with 1-8 carbon atoms; and $R_4$ is a substituted or unsubstituted hydrocarbon group with 1-18 carbon atoms.

phosphonium sulfonate shown by (I) is composed of an organic sulfonate anion and an organic phosphonium cation. Examples of such organic sulfonate anion include aliphatic sulfonates such as methyl

sulfonate, ethyl sulfonate, propyl sulfonate, butyl sulfonate, octyl sulfonate, lauryl sulfonate, myristyl sulfonate, hexadecyl sulfonate, 2-ethylhexyl sulfonate, docosyl sulfonate and tetracosyl sulfonate and their mixtures, substituted phenyl sulfonates such as p-tosilate, butylphenyl sulfonate, dodecylphenyl sulfonate, octadecylphenyl sulfonate, and dibutylphenyl sulfonate, and substituted or unsubstituted naphthyl sulfonates such as naphthyl sulfonate, diisoprcpyl naphthyl sulfonate and dibutylnaphthyl sulfonate. Examples of aforementioned phosphonium cation include aliphatic phosphonium such as tetramethyl phosphonium, tetraethyl phosphonium, tetrabutyl phosphonium,triethylmethyl phosphonium, tributylmethyl phosphonium, tributylethyl phosphonium, trioctylmethyl phosphonium, trimethylbutyl phosphonium, trimethyloctyl phosphonium, trimethyllauryl phosphonium, trimethylstearyl phosphonium, triethyloctyl phosphonium and tributyloctyl phosphonium and aromatic phosphoniums such as tetraphenyl phosphonium, triphenylmethyl phosphonium, triphenylbenzyl phosphonium, tributylbenzyl phosphonium.

The phosphonium sulfonate of the present invention can be obtained by any combination of any of these organic sulfonate anions and organic phosphonium cations but this invention is not limited by the examples given above. The phosphonium sulfonate of the present invention can be produced by mixing a metal salt of a corresponding organic sulfonate and a quaternary phoshonium salt in a solvent and washing out the byproduct inorganic salt with water or extracting a product with an organic solvent such as methanol, isopropanol or acetone. Tetrabutyl phosphonium, dodecylbenzene sulfonate, for example, can be produced with a yield of about 90% by placing 34.8g of sodium dodecylbenzene sulfonate, 33.9g of tetrabutyl phosphonium bromide and 200ml of water in a flask, stirring the mixture for one hour at 80, isolating phosphonium sulfonate which separates as an oily layer, washing it with 50ml of warm water and dehydrating by means of an evaporator. Antistats having phosphonium sulfonate shown by (I) as principal components can be used in many different ways to make use of their antistatic characteristics and heat resistance in providing such antistatic characteristics to polycarbonate or polymethyl methacrylate. A common way to practice this method is to add the agent directly and to mix it at the time of polymer production or fabrication or by preliminarily preparing master chips containing the agent at a high concentration and such a common method can be used equally well with the present invention. In the case of polycarbonate and polymethylmetacrylate, an agent can be added and mixed together either directly or as master chip at the time of fabrication. It can also be added at the time of cast-moulding of polymethlmethacrylate. In order to obtain a favourable result by such an internal application method, the agent of the present invention is added in the ratio of 0.1-10wt% with respect to the moulding composition. It is more preferable to do so in the ratio of 0.3-5wt%. Antistats of the present invention are more strongly resistant to heat than the conventional ionic surfactants such as anionic, cationic and amphoteric surfactants or non-ionic surfactants and the resin compositions have good transparency.

In what follows, examples of the present invention are described for more clearly explaning the present invention but the scope of the present invention is not intended to be limited by these examples.

TEST GROUP 1-1 (Test Examples

A Brabender mill (produced by Toyo Seiki, Inc) was used to mix specified amounts of the antistats of the present invention described in Tables 1A - 1C with polymethylmethacrylate and polycarbonate. These resin compositions were used to mold sheets of 2mm in thickness by using a hot press (produced by Toyo Seiki, Inc). After each sheet was visually inspected and compared with a blank, it was left for one night at constant temperature and humidity of 20° C x 65%RH and its surface resistance was measured thereafter in the same environmental conditions by using a super megohm meter (Model SM-5E produced by Toa Denpa Kogyo, Inc).

The results are shown in Table 1A - 1C wherein *1 indicates log $\omega$; *2 indicates a mixture with average chain length of $C_{22}H_{45}$, $\phi$ indicates a benzene ring, PMMA indicates polymethyl methacrylate, PC indicates polycarbonate mixing was effected under the condition of 130° C x 5 minutes for PMMA and 260° C x 5 minutes for PC and A, $R_1$-$R_4$ are as explained in connection with the formula (I).

TABLE 1A

| (Test Examples) | | | | | | | | | | |
|---|---|---|---|---|---|---|---|---|---|---|
| RESINS | ANTISTATS | | | | | | | RESULTS | | |
| | TYPE | A | $R_1$ | $R_2$ | $R_3$ | $R_4$ | WT% | SURFACE RESISTANCE *1 | APPEARANCE | |
| | | | | | | | | | Transparency | Coloring |
| PMMA | 1a | $C_3H_7$ | $C_4H_9$ | $C_4H_9$ | $C_4H_9$ | $C_4H_9$ | 4 | 9.2 | Good | None |
| | 1a | $C_3H_7$ | $C_4H_9$ | $C_4H_9$ | $C_4H_9$ | $C_4H_9$ | 2 | 9.9 | Good | None |
| | 1a | $C_3H_7$ | $C_4H_9$ | $C_4H_9$ | $C_4H_9$ | $C_4H_9$ | 1 | 10.3 | Good | None |
| | 1b | $C_3H_7$ | $\phi$ | $\phi$ | $\phi$ | $CH_3$ | 2 | 10.2 | Good | None |
| | 1C | $CH_3$ | $C_8H_{17}$ | $C_8H_{17}$ | $C_8H_{17}$ | $CH_3$ | 2 | 10.5 | Good | None |
| PC | 1a | $C_3H_7$ | $C_4H_9$ | $C_4H_9$ | $C_4H_9$ | $C_4H_9$ | 2 | 10.7 | Good | None |
| | 1d | $C_2H_5$ | $\phi$ | $\phi$ | $\phi$ | $\phi$ | 2 | 10.8 | Good | None |

TABLE 1B

| (Test Examples) | | | | | | | | | | |
|---|---|---|---|---|---|---|---|---|---|---|
| RESINS | ANTISTATS | | | | | | | RESULTS | | |
| | TYPE | A | $R_1$ | $R_2$ | $R_3$ | $R_4$ | WT% | SURFACE RESISTANCE *1 | APPEARANCE | |
| | | | | | | | | | Transparency | Coloring |
| PMMA | 2a | $C_9H_{19}\phi$ | $C_4H_9$ | $C_4H_9$ | $C_4H_9$ | $C_4H_9$ | 4 | 9.3 | Good | None |
| | 2a | $C_9H_{19}\phi$ | $C_4H_9$ | $C_4H_9$ | $C_4H_9$ | $C_4H_9$ | 2 | 10.3 | Good | None |
| | 2a | $C_9H_{19}\phi$ | $C_4H_9$ | $C_4H_9$ | $C_4H_9$ | $C_4H_9$ | 1 | 10.9 | Good | None |
| | 2b | $C_9H_{19}\phi$ | $\phi$ | $\phi$ | $\phi$ | $CH_3$ | 2 | 10.5 | Good | None |
| | 2c | $C_{14}H_{29}$ | $C_4H_9$ | $C_4H_9$ | $C_4H_9$ | $C_4H_9$ | 2 | 9.8 | Good | None |
| | 2d | *2 | $C_8H_{17}$ | $C_8H_{17}$ | $C_8H_{17}$ | $CH_3$ | 2 | 10.6 | Good | None |
| | 2i | $C_{12}H_{25}\phi$ | $C_4H_9$ | $C_4H_9$ | $C_4H_9$ | $C_4H_9$ | 2 | 10.4 | Good | None |
| | 2j | $C_{13}H_{27}\phi$ | $C_2H_5$ | $C_2H_5$ | $C_2H_5$ | $C_2H_5$ | 2 | 10.0 | Good | None |
| PC | 2a | $C_9H_{19}\phi$ | $C_4H_9$ | $C_4H_9$ | $C_4H_9$ | $C_4H_9$ | 2 | 11.1 | Good | None |
| | 2b | $C_9H_{19}\phi$ | $\phi$ | $\phi$ | $\phi$ | $CH_3$ | 2 | 11.5 | Good | None |
| | 2e | $C_8H_{17}$ | $C_4H_9$ | $C_4H_9$ | $C_4H_9$ | $\phi$-$CH_2$ | 2 | 10.4 | Good | None |
| | 2i | $C_{12}H_{25}\phi$ | $C_4H_9$ | $C_4H_9$ | $C_4H_9$ | $C_4H_9$ | 2 | 10.9 | Good | None |

TABLE 1C

| (Test Examples) | | | | | | | | | | |
|---|---|---|---|---|---|---|---|---|---|---|
| RESINS | ANTISTATS | | | | | | | RESULTS | | |
| RESINS | TYPE | A | $R_1$ | $R_2$ | $R_3$ | $R_4$ | WT% | SURFACE RESISTANCE *1 | APPEARANCE | |
| | | | | | | | | | Transparency | Coloring |
| PMMA | 3a | *2 | $C_4H_9$ | $C_4H_9$ | $C_4H_9$ | $C_4H_9$ | 4 | 9.8 | Good | None |
| | 3a | *2 | $C_4H_9$ | $C_4H_9$ | $C_4H_9$ | $C_4H_9$ | 2 | 10.5 | Good | None |
| | 3a | *2 | $C_4H_9$ | $C_4H_9$ | $C_4H_9$ | $C_4H_9$ | 1 | 11.2 | Good | None |
| | 3b | *2 | $\phi$ | $\phi$ | $\phi$ | $CH_3$ | 2 | 10.9 | Good | None |
| | 3C | *2 | $C_2H_5$ | $C_2H_5$ | $C_2H_5$ | $CH_3$ | 2 | 9.8 | Good | None |
| PC | 3a | *2 | $C_4H_9$ | $C_4H_9$ | $C_4H_9$ | $C_4H_9$ | 2 | 11.5 | Good | None |
| | 3b | *2 | $\phi$ | $\phi$ | $\phi$ | $CH_3$ | 2 | 11.8 | Good | None |

<u>TEST GROUP 1 - 2</u> (Comparison Examples)

Conventional antistats in Table 2 were used for similar tests as described above. The results of comparisons and measurements are shown in Table 2.

TABLE 2

(Comparison Examples)

| RESINS | ANTISTATS TYPE | ANTISTATS | WT% | RESULTS SURFACE RESISTANCE *1 | RESULTS APPEARANCE Transparency and Coloring |
|---|---|---|---|---|---|
| PMMA | a' | Dodecylbenzene sulfonate Na | 4 | 11.3 | White,turbid |
| | a' | Dodecylbenzene sulfonate Na | 2 | 12.8 | White,turbid |
| | b' | Alkyl (C = 14-15) sulfonate Na | 2 | 11.1 | White,turbid |
| | c' | Glycerine monostearate | 2 | 13< | Good, no Coloring |
| | d' | Lauryltrimethyl ammonium chloride | 2 | 12.0 | Turbid, Yellowing |
| | e' | Lauryltrimethyl ammonium tosilate | 2 | 11.8 | Yellowing |
| | h' | Tetrabutyl phosphonium paraamino benzene sulfonate | 2 | 11.5 | Yellowing |
| PC | a' | Dodecylbenzene sulfonate Na | 2 | 12.8 | Turbid Yellowing |
| | c' | Glycerine monostearate | 2 | 13< | Slight Yellowing |
| | e' | Lauryltrimethyl ammonium tosilate | 2 | 12.7 | Yellowing |
| | i' | Tetraphenyl phosphonium trichlorobenzene sulfonate | 2 | 13< | Good, no coloring |

The tables presented above show clearly that antistats of the present invention are not only resistant against heat and unaffected by humidity but also capable of effectively providing improved antistatic and transparent characteristics to polycarbonate or polymethyl methacrylate resin composition.

## Claims

1. An antistatic resin composition with transparency comprising 99.9 to 90wt% of a synthetic resin selected from polycarbonate or polymethyl methacrylate and 0.1 to 10 wt% of a heat-resistant antistat comprising a phosphonium sulfonate shown by the general formula (I) below:

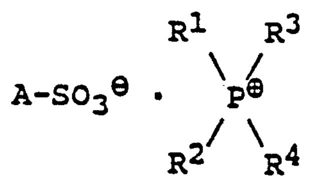

(I)

wherein A is an alkyl group with 1-36 carbon atoms, an alkeny group with 4-24 carbon atoms, a phenyl group,a phenyl group substituted by at least one alkyl group with 1-18 carbon atoms, a naphthyl group or a naphthyl group substituted by at least one alkyl group with 1 -18 carbon atoms; $R_1$, $R_2$ and $R_3$ are identical, each being an aliphatic or aromatic monovalent hydrocarbon group with 1-8 carbon atoms; and $R_4$ is a substituted or unsubstituted hydrocarbon group with 1-18 carbon atoms.

2. An antistatic resin composition as claimed in claim 1 characterised in that it comprises 0.3-5wt% of the said antistat.

European Patent Office

# EUROPEAN SEARCH REPORT

Application Number

EP 89 30 1467

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | JP-A-62 230 835 (TAKEMOTO OIL & FAT CO.)<br>* Page 298, table *<br>----- | 1,2 | C 08 K 5/50<br>C 08 L 33/12<br>C 08 L 69/00 |
| | | | **TECHNICAL FIELDS SEARCHED (Int. Cl.5)** |
| | | | C 08 K<br>C 08 L |

The present search report has been drawn up for all claims

| Place of search | Date of completion of the search | Examiner |
|---|---|---|
| THE HAGUE | 13-10-1989 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)